# EUROPÄISCHE PATENTSCHRIFT

(11) **EP 2 815 542 B1**
(45) Veröffentlichungstag und Bekanntmachung des Hinweises auf die Patenterteilung: **20.04.2016**
(21) Anmeldenummer: 13703766.9
(22) Anmeldetag: 05.02.2013
(51) Int. Cl.: H04L 12/40, H04L 12/28

(54) **HAUSHALTSGERÄT MIT EINEM KOMMUNIKATIONSMODUL UND VERFAHREN ZUR ÜBERTRAGUNG VON DATEN IN EINEM HAUSHALTSGERÄT**
DOMESTIC APPLIANCE HAVING A COMMUNICATION MODULE AND METHOD FOR TRANSMITTING DATA IN A DOMESTIC APPLIANCE
ÉQUIPEMENT MÉNAGER DOTÉ D'UN MODULE DE COMMUNICATION ET PROCÉDÉ DE TRANSMISSION DE DONNÉES DANS UN ÉQUIPEMENT MÉNAGER

(30) Priorität: 14.02.2012 DE 102012202160
(43) Veröffentlichungstag der Anmeldung: 24.12.2014
(73) Patentinhaber: BSH Hausgeräte GmbH, 81739 München (DE)
(72) Erfinder: GAUGLER, Johannes, 93073 Neutraubling (DE); KOLBE, Andreas, 12683 Berlin (DE); LEITL-NOBEL, Martin, 86465 Welden (DE); RANCK, Sharon, 89407 Dillingen (DE); SIPPEL, Matthias, 83329 Waging am See (DE)
(86) Internationale Anmeldenummer: PCT/EP2013/052229
(87) Internationale Veröffentlichungsnummer: WO 2013/120731

(56) Entgegenhaltungen:
- CN-B- 101 926 692
- US-A1- 2006 270 347

## Beschreibung

Die Erfindung betrifft ein Haushaltsgerät mit einem Kommunikationsmodul, welches zur Kommunikation mit einer externen Einrichtung ausgebildet und an eine interne Kommunikationsstruktur des Haushaltsgeräts gekoppelt ist. Die Erfindung betrifft außerdem ein Verfahren zur Übertragung von Daten in einer internen Kommunikationsstruktur eines Haushaltsgeräts.

Es ist bereits Stand der Technik, ein Haushaltsgerät - sei es einen Kühlschrank, sei es einen Backofen, sei es eine Waschmaschine - mit einem Kommunikationsmodul auszustatten, über welches das Haushaltsgerät mit der Außenwelt kommunizieren kann. Über ein derartiges Kommunikationsmodul kann beispielsweise eine Datenübertragung zwischen dem Haushaltsgerät einerseits und einem anderen Haushaltsgerät, einem Rechner oder aber einem Energiemanagementsystem andererseits durchgeführt werden. Ein derartiges Haushaltsgerät, welches mit der Außenwelt kommuniziert, ist beispielsweise aus dem Dokument DE 103 60 171 A1 als bekannt zu entnehmen. Das Haushaltsgerät kommuniziert hier mit einer Hauszentrale, welche zwischen unterschiedlich hohen Datenraten umschaltbar ist. Somit kann das Haushaltsgerät mit sehr unterschiedlichen Datenraten über dasselbe Hausnetz und dieselbe Hauszentrale angesprochen werden.

Ein Haushaltsgerät mit einem Kommunikationsmodul ist außerdem beispielsweise aus den Dokumenten DE 101 26 816 A1 und DE 102 08 221 A1 bekannt.

Die Druckschrift US2006/0270347 offenbart ein Verfahren zur Bereitstellung eines drahtlosen High-Definition-Funksystems welches auf einem Single-Chip die Enkodierung von empfangenen FM-Audio-Daten von einem FM-Radio in ein Bluetooth-Signal umfasst. Dieser Chip ist über weitere l2C und UART/eSPI Datenverbindungen mit einem Mobilteil Basisband-Chip verbunden.

Zwar ist aus dem Stand der Technik bereits eine Kommunikation bekannt, bei welcher zwischen dem Haushaltsgerät und der Außenwelt Daten mit unterschiedlichen Datenraten übertragen werden können. Dies erfolgt im Stand der Technik jedoch wahlweise, so dass zu einem bestimmten Zeitpunkt Daten entweder mit einer geringen Datenrate oder alternativ mit einer höheren Datenrate übertragen werden können. Eine gleichzeitige Datenübertragung mit unterschiedlichen Datenraten ist aufgrund der internen Kommunikationsstruktur des Haushaltsgeräts nicht möglich.

Es ist Aufgabe der Erfindung, eine Lösung aufzuzeigen, wie bei einem Haushaltsgerät der eingangs genannten Gattung die innere Kommunikationsstruktur des Haushaltsgeräts besser als im Stand der Technik an die Datenübertragung mit der Außenwelt angepasst werden kann.

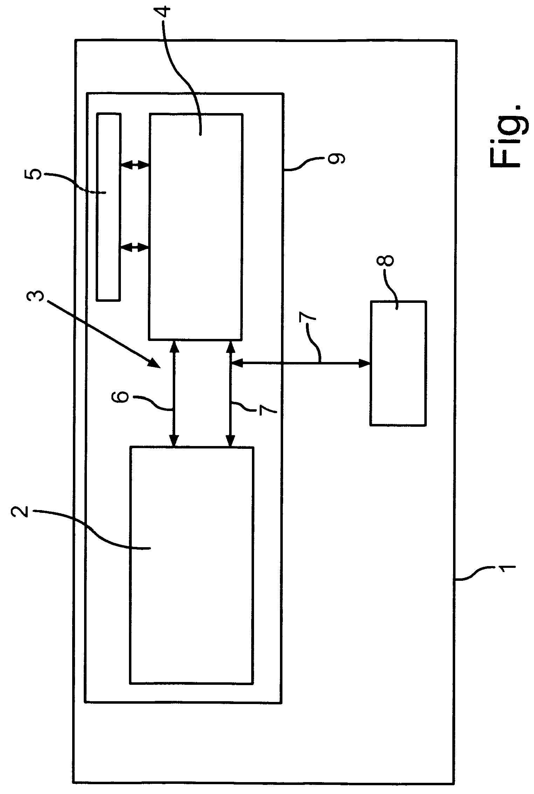

Diese Aufgabe wird erfindungsgemäß durch ein Haushaltsgerät sowie durch ein Verfahren mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figur.

Ein erfindungsgemäßes Haushaltsgerät beinhaltet ein Kommunikationsmodul, welches zur Kommunikation mit einer externen Einrichtung - also mit der Außenwelt - ausgebildet und an eine interne Kommunikationsstruktur des Haushaltsgeräts gekoppelt ist. Erfindungsgemäß ist vorgesehen, dass die interne Kommunikationsstruktur zumindest zwei voneinander verschiedene Datenübertragungskanäle aufweist, über welche eine Datenkommunikation zwischen dem Kommunikationsmodul einerseits und zumindest einer internen Funktionseinheit des Haushaltsgeräts andererseits durchführbar ist.

Die Erfindung geht also den Weg, zwischen dem Kommunikationsmodul einerseits, welches zur Kommunikation mit einer zum Haushaltsgerät externen Einrichtung dient, und mindestens einer Funktionseinheit des Haushaltsgeräts andererseits zumindest zwei voneinander separate Datenübertragungskanäle, nämlich insbesondere unterschiedliche Verbindungsarten, bereitzustellen, an welche das Kommunikationsmodul angeschlossen ist und über welche das Kommunikationsmodul mit der zumindest einen Funktionseinheit des Haushaltsgeräts kommunizieren kann. Die Erfindung beruht dabei auf der Erkenntnis, dass zwischen dem Haushaltsgerät und der Außenwelt bzw. der externen Einrichtung unterschiedliche Datenmengen mit unterschiedlichen Datenraten ausgetauscht werden und somit das Kommunikationsmodul sowie die interne Kommunikationsstruktur des Haushaltsgeräts besser an die Kommunikation mit der Außenwelt angepasst werden kann, indem auch innerhalb des Haushaltsgeräts unterschiedliche Kommunikationsverbindungen bzw. Verbindungsarten bereitgestellt werden. So kann beispielsweise für niedere Datenmengen und Datenraten eine Kommunikationsverbindung mit einer relativ geringen Durchsatzrate verwendet werden, als bei hohen Datenmengen und hohen Datenraten. Darüber hinaus gelingt es durch das erfindungsgemäße Haushaltsgerät, diese unterschiedlichen Kommunikationsverbindungen parallel im Haushaltsgerät zu betreiben, so dass über die beiden Datenübertragungskanäle Daten mit unterschiedlichen Datenraten gleichzeitig übertragen werden können. Es wird somit erfindungsgemäß ermöglicht, dass zwischen dem Kommunikationsmodul und der zumindest einen internen Funktionseinheit des Haushaltsgeräts unterschiedliche Datenmengen mit unterschiedlichen Datenraten übertragen werden können, und dies sogar gleichzeitig. Somit ist auch zwischen dem Haushaltsgerät und der Außenwelt eine gleichzeitige Datenübertragung mit unterschiedlichen Datenraten und/oder unterschiedlichen Datenmengen möglich.

Unter einem Haushaltsgerät wird vorliegend ein Gerät verstanden, welches zur Haushaltsführung eingesetzt wird. Dies kann ein Haushaltsgroßgerät sein, wie beispielsweise eine Waschmaschine, ein Wäschetrockner, eine Geschirrspülmaschine, ein Gargerät, eine Dunstabzugshaube, ein Kältegerät, eine Kühl-Gefrier-Kombination oder ein Klimagerät. Es kann aber auch ein Haushaltskleingerät sein, wie beispielsweise ein Kaffeevollautomat, eine Küchenmaschine, ein Staubsauger oder ein Bügeleisen. Insbesondere wird unter dem Haushaltsgerät ein programmgesteuertes Gerät verstanden, dessen Betriebsprozesse gemäß abgelegten Betriebsprogrammen durchgeführt werden können. Es erweist sich als besonders vorteilhaft, wenn das Haushaltsgerät ein Gerät zur Pflege von Wäschestücken oder ein Gerät zur Zubereitung von Lebensmitteln oder eine Geschirrspülmaschine oder aber ein Kühlschrank ist.

Also ist das Haushaltsgerät mit einem Kommunikationsmodul ausgestattet, über welches das Haushaltsgerät mit der Außenwelt bzw. mit der externen Einrichtung kommunizieren kann. Bei einer solchen externen Einrichtung kann es sich beispielsweise um ein anderes Haushaltsgerät und/oder ein Energiemanagementsystem im Haushalt und/oder einen Server eines Energieanbieters und/oder einen Rechner handeln.

Es erweist sich als besonders vorteilhaft, wenn die zumindest zwei Datenübertragungskanäle jeweils unterschiedliche Datenraten aufweisen, so dass über die zumindest zwei Datenübertragungskanäle Daten jeweils mit unterschiedlichen Durchsatzraten übertragen werden können. Es ist somit möglich, über einen ersten der Datenübertragungskanäle viele Daten innerhalb kürzester Zeit zu übertragen, während über einen zweiten der Datenübertragungskanäle geringere Datenmengen mit einer relativ geringen Datenrate übertragen werden können. Es ist jeweils eine situationsabhängige und bedarfsgerechte Datenübertragung möglich.

Beispielsweise werden über den Datenübertragungskanal mit der größeren Datenrate Multimediadaten übertragen. Bei solchen Multimediadaten kann es sich beispielsweise um Videodaten handeln, die durch das Kommunikationsmodul von der externen Einrichtung empfangen werden. Diese Ausführungsform erweist sich beispielsweise dann als vorteilhaft, wenn das Haushaltsgerät zum Beispiel über ein Display verfügt, auf welchem Videodaten angezeigt werden können. Diese durch das Kommunikationsmodul empfangenen Videodaten können über den Datenübertragungskanal mit der größeren Datenrate sogar in Echtzeit an das Display übertragen werden, so dass die Multimedia-Funktionalitäten im Haushaltsgerät zuverlässig bereitgestellt werden können.

Hingegen können über den Datenübertragungskanal mit der geringeren Datenrate beispielsweise Steuerdaten mit Steuerbefehlen für eine interne Funktionseinheit des Haushaltsgeräts übertragen werden. Diese Steuerdaten können von der externen Einrichtung an das Haushaltsgerät übertragen werden, um beispielsweise das Haushaltsgerät zu einem bestimmten Zeitpunkt ein- oder auszuschalten. Durch die Steuerdaten können auch unterschiedlichste Parameter des Haushaltsgeräts mittels der externen Einrichtung eingestellt werden. Diese Steuerdaten werden in der Regel als relativ geringe Datenmenge übertragen, so dass auch keine große Datenrate erforderlich ist. Zur Übertragung dieser Steuerdaten von dem Kommunikationsmodul an die interne Funktionseinheit des Haushaltsgeräts kann somit der "langsamere" Datenübertragungskanal verwendet werden, und der "schnellere" Datenübertragungskanal kann gleichzeitig beispielsweise für andere, größere Datenmengen genutzt werden. Es wird somit eine optimale Aufteilung der Daten an die zumindest zwei verschiedenen Datenübertragungskanäle erzielt.

Hinsichtlich der Realisierung der zumindest zwei Datenübertragungskanäle können grundsätzlich unterschiedlichste Ausführungsformen vorgesehen sein:

Zumindest einer der Datenübertragungskanäle kann durch einen Kommunikationsbus, insbesondere mit mehreren gleichrangigen Busteilnehmern, gebildet sein. Beispielsweise kann einer der Datenübertragungskanäle durch den RS-485-Bus (auch unter der Bezeichnung "EIA-485" bekannt) realisiert sein. Dies ist insbesondere derjenige Datenübertragungskanal, welcher zur Übertragung von geringeren Datenmengen dient und die geringere Datenrate aufweist. Diese Ausführungsform hat den Vorteil, dass ein standardisierter Kommunikationsbus verwendet werden kann, welcher sich bei Haushaltsgeräten bereits bewährt hat. Dies spart die Kosten und ermöglicht außerdem eine zuverlässige Datenübertragung.

Zumindest einer der Datenübertragungskanäle kann auch durch eine Direktverbindung zwischen dem Kommunikationsmodul und einer internen Funktionseinheit des Haushaltsgeräts gebildet sein. Unter der Direktverbindung wird hier vorzugsweise eine Punkt-zu-Punkt-Verbindung zwischen dem Kommunikationsmodul und der internen Funktionseinheit des Haushaltsgeräts verstanden. Eine solche Direktverbindung kann mit geringem technischen Aufwand realisiert werden.

Besonders bevorzugt kann vorgesehen sein, dass die genannte Direktverbindung zwischen dem Kommunikationsmodul und der internen Funktionseinheit eine Master-Slave-Verbindung ist. Somit wird zwischen dem Kommunikationsmodul und der internen Funktionseinheit eine strukturierte bzw. geordnete Kommunikation ermöglicht, welche durch den Master gesteuert wird. Als Master kann hier beispielsweise das Kommunikationsmodul genutzt werden. Alternativ kann jedoch auch vorgesehen sein, dass die Funktionseinheit ein Master ist, während das Kommunikationsmodul die Funktion des Slaves übernimmt.

Es ist bevorzugt der Datenübertragungskanal mit der höheren Datenrate, welcher durch die Direktverbindung - insbesondere Master-Slave-Verbindung - realisiert wird.

Zumindest einer der Datenübertragungskanäle - nämlich insbesondere der durch die Direktverbindung realisierte Datenübertragungskanal - kann auch durch einen SPI-Bus (Serial Peripheral Interface) gebildet sein. Ein solcher SPI-Bus definiert einen relativ "lockeren" Standard für den Datenaustausch zwischen dem Master und dem Slave, also zwischen dem Kommunikationsmodul einerseits und der zumindest einen Funktionseinheit des Haushaltsgeräts andererseits. Ein derartiger SPI-Bus hat den Vorteil, dass relativ große Datenmengen mit einer vergleichsweise hohen Datenrate übertragen werden können, so dass der SPI-Bus besonders gut für die Übertragung von Multimediadaten geeignet ist.

Sind zwischen dem Kommunikationsmodul und einer Funktionseinheit des Haushaltsgeräts zwei voneinander verschiedene Datenübertragungskanäle vorhanden, von denen einer durch eine Master-Slave-Verbindung (etwa den SPI-Bus) realisiert ist, so ist auch folgendes Szenario möglich: Der Slave (z. B. die Funktionseinheit) kann über den anderen, von der Master-Slave-Verbindung verschiedenen Datenübertragungskanal auch von sich aus Daten an den Master übertragen. Solche Daten können beispielsweise einen Befehl an den Master beinhalten, dass der Master Daten von dem Slave über die Master-Slave-Verbindung abfragen soll. Nach Erhalt dieses Befehls startet der Master dann mit der Datenabfrage vom Slave, und zwar über die Master-Slave-Verbindung. Somit kann die Funktionalität der Master-Slave-Verbindung im Vergleich zu einem herkömmlichen SPI erweitert werden.

In einer Ausführungsform ist vorgesehen, dass über die zumindest zwei Datenübertragungskanäle Daten auch gleichzeitig übertragen werden können. Somit können beispielsweise einerseits Multimediadaten und andererseits auch Steuerdaten gleichzeitig übertragen werden, so dass bei Übertragung von Multimediadaten auch die Übertragung der Steuerdaten möglich ist und umgekehrt. Es wird somit verhindert, dass auf eine der beiden Datenarten zu einem bestimmten Zeitpunkt verzichtet werden muss und die Übertragung der Daten auf einen späteren Zeitpunkt aufgeschoben werden muss.

Das interne Kommunikationsmodul des Haushaltsgeräts kann beispielsweise in Form eines Mikroprozessors bzw. Mikrocontrollers bereitgestellt sein, welcher einen Empfänger sowie einen Sender zur Kommunikation mit der Außenwelt beinhaltet. Dieses Kommunikationsmodul kann beispielsweise auch auf derselben Platine mit der zumindest einen Funktionseinheit des Haushaltsgeräts angeordnet sein. Auch die Funktionseinheit des Haushaltsgeräts kann als Mikrocontroller bzw. Mikroprozessor ausgebildet, mittels welchen unterschiedlichste Funktionalitäten im Haushaltsgerät bereitgestellt werden können, beispielsweise unterschiedliche Verbraucher des Haushaltsgeräts angesteuert werden können.

Ein erfindungsgemäßes Verfahren dient zur Übertragung von Daten innerhalb einer internen Kommunikationsstruktur eines Haushaltsgeräts, an welche ein Kommunikationsmodul gekoppelt ist, welches mit einer zum Haushaltsgerät externen Einrichtung kommuniziert. Über zumindest zwei voneinander verschiedene Datenübertragungskanäle der internen Kommunikationsstruktur wird eine Datenkommunikation zwischen dem Kommunikationsmodul und zumindest einer internen Funktionseinheit des Haushaltsgeräts durchgeführt.

Die mit Bezug auf das erfindungsgemäße Haushaltsgerät vorgestellten bevorzugten Ausführungsformen und deren Vorteile gelten entsprechend für das erfindungsgemäße Verfahren.

Weitere Merkmale der Erfindung ergeben sich aus den Ansprüchen, der Figur und der Figurenbeschreibung. Alle vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels, wie auch unter Bezugnahme auf die beigefügte Zeichnung näher erläutert. Dabei veranschaulicht die einzige Figur in schematischer Darstellung ein Haushaltsgerät gemäß einer Ausführungsform der Erfindung.

Ein in der Figur dargestelltes Haushaltsgerät 1 gemäß einer Ausführungsform der Erfindung ist beispielsweise eine Waschmaschine, ein Wäschetrockner, ein Kühlschrank, eine Geschirrspülmaschine oder ein Backofen. Das Haushaltsgerät 1 beinhaltet ein Kommunikationsmodul 2, welches zur bidirektionalen Kommunikation mit einer externen Einrichtung ausgebildet ist, etwa mit anderen Haushaltsgeräten, einem Rechner und/oder einem Energiemanagementsystem im Haushalt. Das Kommunikationsmodul 2 kann beispielsweise zur drahtlosen und/oder zur drahtgebundenen Datenübertragung mit der Außenwelt des Haushaltsgeräts 1 ausgebildet sein. Zwischen dem Kommunikationsmodul 2 und der externen Einrichtung können vorzugsweise Daten mit unterschiedlichen Datenraten und/oder unterschiedlichen Datenmengen ausgetauscht werden.

Beispielsweise verfügt das Kommunikationsmodul über eine erste Schnittstelle mit einer relativ geringen Datenrate sowie eine zweiten Schnittstelle mit einer gegenüber der ersten Schnittstelle höheren Datenrate, wobei über diese Schnittstellen das Kommunikationsmodul 2 mit externen Einrichtungen kommunizieren kann. Zwischen dem Haushaltsgerät 1 und seiner Umgebung können also unterschiedliche Datenmengen mit unterschiedlichen Datenraten ausgetauscht werden.

Das Kommunikationsmodul 2 ist über eine interne Kommunikationsstruktur 3 des Haushaltsgeräts 1 mit einer internen ersten Funktionseinheit 4 des Haushaltsgeräts 1 kommunikationstechnisch gekoppelt. Die erste Funktionseinheit 4 kann beispielsweise ein Mikrocontroller sein, mittels welchem unterschiedlichste Verbraucher des Haushaltsgeräts 1 angesteuert werden können. Die erste Funktionseinheit 4 kann beispielsweise eine zentrale Steuereinrichtung des Haushaltsgeräts 1 sein. Über eine entsprechende Schnittstelle 5 kann die erste Funktionseinheit 4 auch Eingabedaten empfangen sowie Daten ausgeben.

Im Ausführungsbeispiel umfasst die Kommunikationsstruktur 3 einen ersten Datenübertragungskanal 6 sowie einen zweiten Datenübertragungskanal 7. Der erste Datenübertragungskanal 6 weist eine größere Datenrate als der zweite Datenübertragungskanal 7 auf, so dass über den ersten Datenübertragungskanal 6 größere Datenmengen zwischen dem Kommunikationsmodul 2 und der ersten Funktionseinheit 4 mit einer großen Datenrate übertragen werden können. Der erste Datenübertragungskanal 6 ist dabei vorzugsweise durch eine Punkt-zu-Punkt-Verbindung, also eine Direktverbindung zwischen dem Kommunikationsmodul 2 und der ersten Funktionseinheit 4 realisiert. Diese Direktverbindung kann dabei als SPI-Bus ausgeführt sein. Auch hierbei kann das Kommunikationsmodul 2 ein Master sein, während die erste Funktionseinheit 4 ein Slave sein kann oder umgekehrt.

Der langsamere Datenübertragungskanal 7 kann demgegenüber durch einen Kommunikationsbus realisiert sein, etwa durch den RS-485-Bus. Über den zweiten Datenübertragungskanal 7 können die jeweiligen Bus-Teilnehmer als gleichrangige Teilnehmer miteinander kommunizieren. An diesen Kommunikationsbus kann auch eine zweite Funktionseinheit 8 des Haushaltsgeräts 1 angeschlossen sein. Der Kommunikationsbus stellt dabei vorzugsweise das zentrale Bussystem des Haushaltsgeräts 1 dar, über welches verschiedenste Steuerdaten, Sensordaten und dergleichen zwischen einer Vielzahl von Funktionseinheiten des Haushaltsgeräts übertragen werden können.

Über das Kommunikationsmodul 2 kann das Haushaltsgerät 1 Multimediadaten empfangen, die an das Kommunikationsmodul 2 z. B. durch einen externen Rechner übertragen werden. Diese Multimediadaten überträgt das Kommunikationsmodul 2 dann über den ersten Datenübertragungskanal 6 an die erste Funktionseinheit 4. Diese Multimediadaten können beispielsweise Videodaten beinhalten, die dann auf einem Display des Haushaltsgeräts 1 angezeigt werden. Das Kommunikationsmodul 2 kann auch Steuerdaten - beispielsweise von einem Energiemanagementsystem - empfangen, wobei diese Steuerdaten über den zweiten Datenübertragungskanal 7 übertragen werden. Die Steuerdaten können einen Befehl beinhalten, dass das Haushaltsgerät 1 zu einem bestimmten Zeitpunkt in Betrieb genommen werden soll oder aber ausgeschaltet werden soll.

Die beiden Datenübertragungskanäle 6, 7 können auch parallel, also gleichzeitig betrieben werden. Dies bedeutet, dass über die beiden Datenübertragungskanäle 6, 7 Daten auch gleichzeitig übertragen werden können. Die Datenübertragung durch einen der beiden Datenübertragungskanäle 6, 7 muss somit bei Vorliegen einer Datenübertragung durch den anderen Kanal nicht unterbrochen werden.

Das Kommunikationsmodul 2 und die erste Funktionseinheit 4 können auch beispielsweise als eine gemeinsame Einheit 9 bereitgestellt sein. Z.B. können das Kommunikationsmodul 2 und die erste Funktionseinheit 4 auf einer gemeinsamen Platine angeordnet sein. Somit wird der wertvolle Bauraum im Haushaltsgerät 1 gespart.

Wie bereits ausgeführt, ist bei der SPI-Direktverbindung zwischen dem Kommunikationsmodul 2 und der ersten Funktionseinheit 4 eine dieser Komponenten ein Master, während die andere Komponente ein Slave ist. Eine Datenübertragung vom Slave an den Master kann somit über den ersten Datenübertragungskanal 6 nur dann erfolgen, wenn der Master diese Datenübertragung zulässt, etwa einen Befehl an den Slave sendet, mit welchem Daten vom Slave abgefragt werden. Das Vorhandensein des zweiten Datenübertragungskanals 7 ermöglicht nun, dass von dem Slave über den zweiten Datenübertragungskanal 7 an den Master eine Nachricht gesendet werden kann, mit welcher der Master dazu aufgefordert wird, über den ersten Datenübertragungskanal 6 den Steuerbefehl an den Slave zu übertragen, um Daten von dem Slave abzufragen. Eine solche Vorgehensweise ist bei den herkömmlichen SPI-Bus-Systemen nicht möglich und schafft somit zusätzliche Möglichkeiten zur Kommunikation zwischen dem Master und dem Slave.

### Bezugszeichenliste

- 1: Haushaltsgerät
- 2: Kommunikationsmodul
- 3: Kommunikationsstruktur
- 4, 8: Funktionseinheit
- 5: Schnittstelle
- 6,7: Datenübertragungskanal
- 9: gemeinsame Einheit

## Patentansprüche

1. Haushaltsgerät (1) mit einem Kommunikationsmodul (2), welches zur Kommunikation mit einer externen Einrichtung ausgebildet und an eine interne Kommunikationsstruktur (3) des Haushaltsgeräts (1) gekoppelt ist, wobei die interne Kommunikationsstruktur (3) zumindest zwei voneinander verschiedene Datenübertragungskanäle (6, 7) aufweist, über welche eine Datenkommunikation zwischen dem Kommunikationsmodul (2) und zumindest einer internen Funktionseinheit (4, 8) des Haushaltsgeräts (1) durchführbar ist,
**dadurch gekennzeichnet, dass**
ein erster der Datenübertragungskanäle (6) als SPI-Bus und ein zweiter der Datenübertragungskanäle (7) als RS-485-Bus ausgestaltet ist,
wobei der SPI-Bus dafür eingerichtet ist, eine Master-Slave-Verbindung zwischen dem Kommunikationsmodul (2) und einer Funktionseinheit der zumindest einen internen Funktionseinheit (4, 8) bereitzustellen,
wobei entweder das Kommunikationsmodul (2) der Master und die Funktionseinheit der Slave oder das Kommunikationsmodul (2) der Slave und die Funktionseinheit der Master ist,
wobei der Slave dafür eingerichtet ist, über den RS-485-Bus Daten an den Master zu übertragen, die einen Befehl umfassen, dass der Master Daten von dem Slave über die Master-Slave-Verbindung abfragen soll.

2. Haushaltsgerät (1) nach Anspruch 1, **dadurch gekennzeichnet, dass** die zumindest zwei Datenübertragungskanäle (6, 7) Kanäle mit jeweils unterschiedlichen Datenraten sind.

3. Haushaltsgerät (1) nach Anspruch 2, **dadurch gekennzeichnet, dass** über den Datenübertragungskanal (6, 7) mit der größeren Datenrate Multimediadaten, insbesondere Videodaten, übertragbar sind.

4. Haushaltsgerät (1) nach Anspruch 2 oder 3, **dadurch gekennzeichnet, dass** über den Datenübertragungskanal (6, 7) mit der geringeren Datenrate Steuerdaten mit Steuerbefehlen für eine interne Funktionseinheit (4, 8) des Haushaltsgeräts (1) übertragbar sind.

5. Haushaltsgerät (1) nach einem der vorhergehenden Ansprüche, **dadurch gekennzeichnet, dass** über die zumindest zwei Datenübertragungskanäle (6, 7) Daten gleichzeitig übertragbar sind.

6. Verfahren zur Übertragung von Daten in einer internen Kommunikationsstruktur (3) eines Haushaltsgeräts (1), an welche ein Kommunikationsmodul (2) gekoppelt ist, welches mit einer externen Einrichtung kommuniziert, wobei die interne Kommunikationsstruktur (3) zumindest zwei voneinander verschiedene Datenübertragungskanäle (6, 7) aufweist, über welche eine Datenkommunikation zwischen dem Kommunikationsmodul (2) und zumindest einer internen Funktionseinheit (4, 8) des Haushaltsgeräts (1) durchführbar ist, wobei ein erster der Datenübertragungskanäle (6) als SPI-Bus und ein zweiter der Datenübertragungskanäle (7) als RS-485-Bus ausgestaltet ist, wobei das Verfahren durch die Schritte gekennzeichnet ist
Aufbauen einer Master-Slave-Verbindung zwischen dem Kommunikationsmodul (2) und einer Funktionseinheit der zumindest einen internen Funktionseinheit (4, 8) mittels des SPI-Bus, wobei entweder das Kommunikationsmodul (2) der Master und die Funktionseinheit der Slave oder das Kommunikationsmodul (2) der Slave und die Funktionseinheit der Master ist, und
Übertragen von Daten vom Slave an den Master über den RS-485-Bus, wobei die Daten einen Befehl umfassen, dass der Master Daten von dem Slave über die Master-Slave-Verbindung abfragen soll.

## Claims

1. Domestic appliance (1) having a communication module (2), which is embodied for communication with an external facility and is coupled to an internal communication structure (3) of the domestic appliance (1), wherein the internal communication structure (3) has at least two data transmission channels (6, 7) which differ from one another, by way of which data can be communicated between the communication module (2) and at least one internal functional unit (4, 8) of the domestic appliance (1),
**characterised in that**
a first of the data transmission channels (6) is embodied as an SPI bus and a second of the data transmission channels (7) is embodied as an RS-485 bus,
wherein the SPI bus is designed to provide a master-slave link between the communication module (2) and a functional unit of the at least one internal functional unit (4, 8),
wherein either the communication module (2) is the master and the functional unit is the slave or the communication module (2) is the slave and the functional unit is the master,
wherein the slave is designed to transmit data via the RS-485 bus to the master, said data comprising a command that the master is to request data from the slave via the master-slave link.

2. Domestic appliance (1) according to claim 1, **characterised in that** the at least two data transmission channels (6, 7) are channels with different data rates in each case.

3. Domestic appliance (1) according to claim 2, **characterised in that** multimedia data, in particular video data, can be transmitted via the data transmission channel (6, 7) with the larger data rate.

4. Domestic appliance (1) according to claim 2 or 3, **characterised in that** control data with control commands for an internal functional unit (4, 8) of the domestic appliance (1) can be transmitted via the data transmission channel (6, 7) with the lower data rate.

5. Domestic appliance (1) as claimed in one of the preceding claims, **characterised in that** data can be transmitted simultaneously via the at least two data transmission channels (6, 7).

6. Method for transmitting data in an internal communication structure (3) of a domestic appliance (1), to which a communication module (2) is coupled, which communicates with an external facility, wherein the internal communication structure (3) has at least two data transmission channels (6, 7) which differ from one another, via which a data communication can be performed between the communication module (2) and at least one internal functional unit (4, 8) of the domestic appliance (1), wherein a first of the data transmission channels (6) is embodied as an SPI bus and a second of the data transmission channels (7) is embodied as an RS-485 bus, wherein the method is **characterised by** the steps:
establishing a master-slave link between the communication module (2) and a functional unit of the at least one internal functional unit (4, 8) by means of the SPI bus, wherein either the communication module (2) is the master and the functional unit is the slave, or the communication module (2) is the slave and the functional unit is the master, and;
transmitting data from the slave to the master via the RS-485 bus, wherein the data comprises a command that the master is to request data from the slave via the master-slave link.

## Revendications

1. Appareil ménager (1) comprenant un module de communication (2) qui est réalisé pour la communication avec un dispositif externe et est couplé à une structure de communication interne (3) de l'appareil ménager (1), la structure de communication interne (3) présentant au moins deux canaux de transmission de données (6, 7) différents les uns des autres, par l'intermédiaire desquels une communication de données peut être exécutée entre le module de communication (2) et au moins une unité fonctionnelle interne (4, 8) de l'appareil ménager (1),
**caractérisé en ce qu'**
un premier des canaux de transmission de données (6) est réalisé comme bus SPI et **en ce qu'**un deuxième des canaux de transmission de données (7) est réalisé comme bus RS485,
le bus SPI étant conçu pour fournir une liaison maître-esclave entre le module de communication (2) et une unité fonctionnelle de l'au moins une unité fonctionnelle interne (4, 8),
soit le module de communication (2) étant le maître et l'unité fonctionnelle l'esclave soit le module de communication (2) étant l'esclave et l'unité fonctionnelle le maître, l'esclave étant conçu pour transmettre des données au maître par l'intermédiaire du bus RS485, lesquelles comprennent une instruction indiquant que le maître doit demander des données de l'esclave par l'intermédiaire de la liaison maître-esclave.

2. Appareil ménager (1) selon la revendication 1, **caractérisé en ce que** les au moins deux canaux de transmission de données (6, 7) sont des canaux ayant respectivement différents débits de données.

3. Appareil ménager (1) selon la revendication 2, **caractérisé en ce que** des données multimédia, notamment des données vidéo, sont transmissibles par l'intermédiaire du canal de transmission de données (6, 7) ayant le débit de données le plus grand.

4. Appareil ménager (1) selon la revendication 2 ou 3, **caractérisé en ce que** des données de commande comprenant des instructions de commande pour une unité fonctionnelle interne (4, 8) de l'appareil ménager (1) sont transmissibles par l'intermédiaire du canal de transmission de données (6, 7) ayant le moindre débit de données.

5. Appareil ménager (1) selon l'une quelconque des revendications précédentes, **caractérisé en ce que** des données sont transmissibles simultanément par l'intermédiaire des au moins deux canaux de transmission de données (6, 7).

6. Procédé de transmission de données dans une structure de communication interne (3) d'un appareil ménager (1), à laquelle est couplé un module de communication (2) qui communique avec un dispositif externe, la structure de communication interne (3) présentant au moins deux canaux de transmission de données (6, 7) différents les uns des autres, par l'intermédiaire desquels une communication de données peut être exécutée entre le module de communication (2) et au moins une unité fonctionnelle interne (4, 8) de l'appareil ménager (1), un premier des canaux de transmission de données (6) étant réalisé comme bus SPI et un deuxième des canaux de transmission de données (7) étant réalisé comme bus RS485, le procédé étant **caractérisé par** les étapes
établissement d'une liaison maître-esclave entre le module de communication (2) et une unité fonctionnelle de l'au moins une unité fonctionnelle interne (4, 8) au moyen du bus SPI, soit le module de communication (2) étant le maître et l'unité fonctionnelle l'esclave soit le module de communication (2) étant l'esclave et l'unité fonctionnelle le maître, et
transmission de données de l'esclave au maître par l'intermédiaire du bus RS485, les données comprenant une instruction indiquant que le maître doit demander des données de l'esclave par l'intermédiaire de la liaison maître-esclave.
